# EUROPÄISCHE PATENTSCHRIFT

(11) **EP 2 526 752 B1**
(45) Veröffentlichungstag und Bekanntmachung des Hinweises auf die Patenterteilung: **14.05.2014**
(21) Anmeldenummer: 12157628.4
(22) Anmeldetag: 01.03.2012
(51) Int. Cl.: A01B 69/04, A01D 43/07, B65G 67/22

(54) **Erntevorrichtung**
Harvesting device
Dispositif de récolte

(30) Priorität: 25.05.2011 DE 102011050629
(43) Veröffentlichungstag der Anmeldung: 28.11.2012
(73) Patentinhaber: CLAAS Selbstfahrende Erntemaschinen GmbH, 33428 Harsewinkel (DE)
(72) Erfinder: Diekhans, Norbert, Dr., 33335 Gütersloh (DE); Huster, Jochen, 33330 Gütersloh (DE); Claussen, Frank, 33428 Harsewinkel (DE); Behnke, Willi, 33803 Steinhagen (DE); Krause, Thilo, 39249 Glinde (DE); Kriebel, Bastian, 48155 Münster (DE); Brune, Markus, 33428 Marienfeld (DE)

(56) Entgegenhaltungen:
- EP-A1- 1 645 178
- EP-A1- 2 165 590
- US-A1- 2002 083 695

## Beschreibung

Die Erfindung betrifft eine Erntevorrichtung, im Wesentlichen bestehend aus einer selbstfahrenden Erntemaschine und einem mit einer Antriebseinheit versehenen fahrbaren Sammelbehälter, der relativ zu der Erntemaschine positionierbar und parallel zu dieser bewegbar ist und dem im Erntebetrieb über ein mit einem Auslaufstutzen versehenes Förderrohr ein Erntegut von der Erntemaschine aus mittelbar oder unmittelbar zuführbar ist, mit einer Einrichtung zur gleichmäßigen Beschickung dieses Sammelbehälters. Weiterhin betrifft die Erfindung gemäß dem Oberbegriff des unabhängigen Patentanspruchs 15 ein Verfahren zum Abtanken eines in einem Korntank eines selbstfahrenden Mähdreschers gespeicherten Erntegutes in einen mit einer Antriebseinheit versehenen fahrbaren Sammelbehälter, wobei der Sammelbehälter relativ zum Mähdrescher positioniert und parallel zu diesem bewegt wird und dabei das Erntegut gleichzeitig mit dem Erntebetrieb über ein mit einem Auslaufstutzen versehenes Korntankauslaufrohr dem Sammelbehälter mittelbar oder unmittelbar zugeführt wird.

In den Anfängen ihrer technischen Entwicklung waren als Mähdrescher oder Feldhäcksler ausgebildete Erntemaschinen in der Regel mit keinem eigenen Antrieb versehen, sondern sie wurden von einem Ackerschlepper gezogen und über dessen Zapfwelle angetrieben. Inzwischen sind nahezu alle Mähdrescher, die in der Getreide-, Raps- oder Maisernte eingesetzt werden, als selbstfahrende Erntemaschinen ausgebildet. Auch leistungsstarke Feldhäcksler, die von Großbetrieben oder Lohnunternehmern verwendet werden, verfügen als selbstfahrende Erntemaschine über eine eigene Antriebseinheit.

In der Landwirtschaft steht für die Getreide- und Rapsernte pro Jahr nur ein relativ kurzer Zeitraum zur Verfügung, nämlich der, in welchem das Halmgut zur Erzielung eines vergleichbar guten Ernteergebnisses einen bestimmten Reifegrad erreicht hat. Hinzu kommt, dass zur Einsparung von Trocknungskosten, die sich erheblich auf die erzielbaren Preise auswirken, nach Möglichkeit ein bestimmter Feuchtigkeitsgehalt nicht überschritten werden darf. Demzufolge kommen sehr effiziente Erntemaschinen, zum Beispiel Mähdrescher mit hoher Flächenleistung, zum Einsatz, deren als Getreidebeziehungsweise Rapsmähwerk oder Maispflücker ausgebildeter Erntevorsatz mit großer Arbeitsbreite ausgeführt ist.

Aus dieser Steigerung der Arbeitsbreite des Erntevorsatzes und einer entsprechenden Erhöhung der Leistungsfähigkeit des Dreschwerkes resultiert eine innerhalb kurzer Zeitintervalle im Korntank anfallende große Erntegutmenge. Daher müsste das Fassungsvermögen des Korntanks ebenfalls deutlich erhöht werden, damit nicht in kurzen Zeitabständen der Erntevorgang unterbrochen und einer von eventuell mehreren auf dem Feld postierten Sammelbehältern zum Zwecke des Überladens des Erntegutes auf diesen angefahren werden muss. Zum einen würde eine entsprechende Erhöhung des Fassungsvermögens des Korntanks und die Speicherung der maximalen Erntegutmenge zu einer erheblichen Erhöhung des Gewichts dieser selbstfahrenden Erntemaschine führen. Der Nachteil einer entsprechenden Gewichtszunahme ist die von der Bereifung des Mähdreschers auf dem Feld erzeugte Bodenverdichtung, die sich ungünstig auf die Bodengare auswirkt, denn in diesen extrem verdichteten Spuren kann sich nur in erheblich reduziertem Umfang ein Bodenleben entwickeln, da die Verdichtung des Bodens zu einer deutlichen Abnahme der Luft- und Wasserleitfähigkeit führt. Zum anderen würden sich dann, wenn das Fassungsvermögen des Korntanks nicht erhöht würde, die Intervalle für ein Abtanken des Erntegutes aus dem Korntank in den jeweiligen Sammelbehälter deutlich verkürzen, so dass der Erntevorgang sehr häufig unterbrochen werden muss und sich in der Summe eine relativ große Stillstandszeit des Mähdreschers ergibt.

Aus diesem Grund erfolgt bei leistungsstarken Mähdreschern mit entsprechend großer Arbeitsbreite des Erntevorsatzes das Überladen des Erntegutes aus dem Korntank in den Sammelbehälter, also das Abtanken, unter Fortsetzung des Erntevorgangs. Das bedeutet, dass in einer Phase, in der der Korntank des Mähdreschers seinen maximalen Füllstand erreicht hat, der Sammelbehälter, der ebenfalls selbstfahrend ausgebildet oder mittels einer Zugmaschine bewegbar sein kann, eine Position neben dem Mähdrescher einnimmt, in der das Erntegut über ein mit einem Auslaufstutzen versehenes Förderrohr in den Sammelbehälter gefördert wird.

In diesem Zusammenhang sind Systeme bekannt, bei denen der Fahrer des Mähdreschers nicht nur sämtliche Funktionen des Mähdreschers überwacht und an diesem die jeweils nötigen Verstellvorgänge vornimmt; von seiner Fahrerkabine aus fordert der Fahrer auch den jeweils der Erntemaschine am nächsten befindlichen Sammelbehälter an und steuert diesen derart, dass der Sammelbehälter parallel zur Erntemaschine fährt. Folglich ist dabei die Fahrgeschwindigkeit des Sammelbehälters auf die der Erntemaschine abgestimmt. Nachdem der Sammelbehälter in dieser Weise in einer Position relativ zum Mähdrescher bewegt worden ist, erfolgt das Überladen bzw. Abtanken des Erntegutes mittels einer in dem entsprechend ausgeschwenkten Förderrohr angeordneten Schnecke für die Korntankentleerung.

Während der Zuführung des Erntegutes zum Sammelbehälter ist dieser Überladevorgang ständig zu überwachen, damit während dieses Vorgangs keine Körnerverluste auftreten. Es kann beispielsweise sein, dass der Auslaufstutzen des Förderrohrs eine Position zum Sammelbehälter einnimmt, in der Bestandteile des Erntegutes neben den Sammelbehälter fallen. Dieses Problem würde eventuell auch dann eintreten, wenn witterungsbedingt ein starker Seitenwind Körner aus dem Erntegutstrom löst und diese dann neben den Sammelbehälter befördert. Außerdem soll nach Möglichkeit das gesamte Volumen des Sammelbehälters ausgenutzt werden, das heißt, das Erntegut muss optimal in dem Sammelbehälter verteilt werden. Weiterhin ist es erforderlich, die Befüllung des Sammelbehälters dann zu stoppen, wenn ein Höchststand des Sammelgutes in den einzelnen Bereichen des Sammelbehälters erreicht ist, da anderenfalls ebenfalls Teile des Erntegutes am Ende des Befüllvorgangs oder beim anschließenden Abtransport des Sammelbehälters auf das Feld gelangen würden. Dabei spielt auch eine wichtige Rolle, dass sich der Fahrer, beispielsweise bei der Getreideernte, primär auf den Mäh- und Dreschvorgang konzentrieren sollte, also die Sicht auf den Erntevorsatz eine wichtige Rolle spielt. Wenn er daneben aber auch die Position des Sammelbehälters und den Abtankvorgang überwachen muss, ist er aber zu stark von dieser Hauptaufgabe abgelenkt. Darüber hinaus ist für ihn häufig die Sicht auf den Sammelbehälter durch eine starke Staubentwicklung während des Dreschvorgangs und des Abtankvorganges eingeschränkt, so dass für ihn insgesamt kaum Möglichkeiten bestehen, die Zuführung des Erntegutes in den Sammelbehälter hundertprozentig zu überwachen.

Die vorgenannten Probleme treten sowohl für eine mit einem Dreschwerk versehene Erntemaschine als auch für einen selbstfahrenden Feld- oder Maishäcksler auf, wobei dann allerdings das Erntegut nicht in einem Tank an der Erntemaschine zwischengespeichert wird, sondern unmittelbar über das Förderrohr in Richtung des Sammelbehälters ausgeworfen wird. Auch in diesem Fall kommt es auf eine exakte Positionierung der Sammelbehälter an, die ständig hinter oder neben der Erntemaschine fahren müssen.

Eine Erntevorrichtung mit einer selbstfahrenden Erntemaschine und einem eine Antriebseinheit aufweisenden fahrbaren Sammelbehälter der im Oberbegriff des Patentanspruchs 1 genannten Gattung ist aus der EP 2 245 916 A1 bekannt. Dabei soll der von einer Zugmaschine parallel zur Erntemaschine bewegte Sammelbehälter gleichmäßig beladen werden, indem sich jeweils die Position des Sammelbehälters gegenüber dem Auslaufstutzen des Förderrohres in Fahrtrichtung verändern. Diese Veränderung der relativen Position des Sammelbehälters gegenüber der Erntemaschine sowie das Einhalten einer parallelen Fahrspur soll durch ein GPS-System erreicht werden. Weiterhin ist der Auslaufstutzen gegenüber dem Förderrohr schwenkbar ausgebildet und wird über das automatische Steuersystem derart verstellt, dass das austretende Erntegut unter Vermeidung von Körnerverlusten gezielt in den Sammelbehälter gelangt.

Außerdem geht aus der EP 1 219 153 A2 ein aus einer selbstfahrenden Erntemaschine und einem fahrbaren Sammelbehälter bestehendes System als bekannt hervor, bei dem ebenfalls relative Positionen der Erntemaschine und des Sammelbehälters in Abhängigkeit von einer GPS-Überwachung und von Funksignalen derart zueinander verschoben werden sollen, dass der Sammelbehälter entsprechend seiner Kapazität vollständig beladen wird.

Es ist Aufgabe der vorliegenden Erfindung, eine Erntevorrichtung der vorgenannten Gattung derart weiterzubilden, dass unter Verwendung eines funktionssicheren Systems ein Verlust von Anteilen des Erntegutes vermieden und der jeweilige Sammelbehälter vollständig befüllt wird. Außerdem soll die Zuleitung des Erntegutes in den Sammelbehälter unter sämtlichen Erntebedingungen ermöglicht werden.

Diese Aufgabe wird, ausgehend vom Oberbegriff des Patentanspruchs 1, in Verbindung mit dessen kennzeichnenden Merkmalen gelöst. Gemäß dem kennzeichnenden Teil des Patentanspruchs 1 soll der Sammelbehälter während der Förderung des Erntegutes mittels einer Steuereinrichtung in einer konstanten relativen Position zur Erntemaschine bewegt werden, und der Sammelbehälter soll eine Befülleinrichtung aufweisen, mittels der eine gleichmäßige Verteilung des Erntegutes im Sammelbehälter erzielbar ist. Folglich wird die Funktion der Verteilung des Erntegutes innerhalb des Sammelbehälters alleine mittels der erfindungsgemäßen Befülleinrichtung erzielt, die am Sammelbehälter vorgesehen ist. Der parallel zu der Erntemaschine bewegte Sammelbehälter hält dabei einen konstanten Sicherheitsabstand gegenüber der Erntemaschine ein und wird mit einer Geschwindigkeit vorwärtsbewegt, die der Geschwindigkeit der Erntemaschine entspricht. Das führt dazu, dass mit Beginn der Zuführung des Erntegutes aus der Erntemaschine der entsprechende Auslaufstutzen des Förderrohrs eine fixe Position in Bezug auf einen Einlass der Befülleinrichtung einnimmt. Zuvor wird der Sammelbehälter aus seiner Warteposition heraus mit höherer Geschwindigkeit an die Erntemaschine heranfahren und dann anschließend in der parallelen Fahrt, wie dargelegt, die eigene Geschwindigkeit an die der Erntemaschine anpassen, sobald der Auslaufstutzen seine vorgesehene Position eingenommen hat. Dadurch kann erreicht werden, dass Probleme sowohl bei der Zuordnung des Sammelbehälters zu der Erntemaschine als auch bei der gleichmäßigen Befüllung des Sammelbehälters vermieden werden.

Dem gegenüber findet nach den zum Stand der Technik genannten Druckschriften EP 2 245 916 A1 und EP 1 219 153 A2 laufend eine Änderung der Position des Sammelbehälters gegenüber der Erntemaschine statt, um auf diese Weise eine gleichmäßige Verteilung des Ernteguts im Sammelbehälter zu erzielen. Dabei kann das Risiko auftreten, dass in bestimmten Bereichen des Sammelbehälters dessen Füllstand überschritten wird und folglich Teile des Ernteguts auf das Feld gelangen und somit als Ernteertrag verloren gehen.

Gemäß einer bevorzugten Ausgestaltung der Erfindung soll die Erntemaschine als selbstfahrender Mähdrescher ausgebildet sein, wobei das als Korntankauflaufrohr ausgebildete Förderrohr von einem Korntank des Mähdreschers ausgeht. Dabei wird der Füllstand des als Zwischenspeicher dienenden Korntanks des Mähdreschers laufend überwacht, und es wird vor Erreichen eines maximalen Füllstands ein dem Mähdrescher am nächsten positionierter Sammelbehälter selbsttätig angefordert. Daraufhin wird der Sammelbehälter von einer als Ackerschlepper ausgebildeten Zugmaschine in die Position für ein anschließendes Abtanken des Ernteguts gebracht. Natürlich kann das Anfahren des im Erntebetrieb befindlichen Mähdreschers durch den betreffenden Sammelbehälter auch zunächst manuell erfolgen, woraufhin dann die Steuereinrichtung aber den Sammelbehälter in seine für den Abtankvorgang vorgesehene Position bringen und diese Positionierung gegenüber dem fahrenden Mähdrescher beibehalten soll.

Zu diesem Zweck und eventuell auch für ein selbsttätiges Anfahren des Sammelbehälters an den Mähdrescher können sowohl die als Mähdrescher ausgebildete Erntemaschine als auch die Antriebseinheit des fahrbaren Sammelbehälters mit einem Navigationssystem versehen sein, über das beide während der Förderung des Ernteguts in einer konstanten relativen Position zueinander gehalten werden. Dabei wird es sich vorzugsweise um eine Lösung auf der Basis von GPS-Signalen sowie Funksystemen handeln, über die eine sogenannte "elektronische Deichsel" herstellbar ist. Aus Sicherheitsgründen kann ein ergänzendes System vorgesehen sein, das die Positionierung der Fahrzeuge zueinander beibehält, wenn die GPS- oder Funkübertragung gestört wird. So kann beispielsweise mittels Abstandssensoren am Sammelbehälter oder an der Erntemaschine, die beim Ausfall der normalen Steuerungssysteme eingreifen, die beiden Fahrzeugpositionen zusätzlich überwacht und folglich die Position des Sammelbehälters korrigiert werden. Diese Abstandssensoren würden eine Anpassung der Geschwindigkeit und Lenkwinkelkorrekturen an der Antriebseinheit des Sammelbehälters vornehmen.

Weiterhin soll ein am Mähdrescher angeordneter Erntevorsatz eine derartige seitliche Erstreckung aufweisen, dass dieser Erntevorsatz den Mähdrescher beidseitig überragt, wobei in diesem Fall der Sammelbehälter während der Förderung des Erntegutes über das Korntankauslaufrohr eine Position im Wesentlichen innerhalb der Erstreckung des Erntevorsatzes einnimmt. Eine derartige Möglichkeit ergibt sich bei Mähdreschern, deren Erntevorsatz, das heißt Schneidwerk für die Getreide beziehungsweise Rapsernte oder Maispflücker, die übrige Breite des Mähdreschers deutlich überragt. Das Korntankauslaufrohr ist bei Mähdreschern üblicherweise, in Fahrtrichtung gesehen, auf der linken Seite vorgesehen. Demzufolge würde während eines Abtankvorgangs der vorzugsweise von einem Ackerschlepper gezogene Sammelbehälter sich innerhalb dieser seitlichen Erstreckung des Erntevorsatzes bewegen. Es gibt aber einige Erntebedingungen, bei denen es vorteilhaft ist, wenn der Sammelbehälter innerhalb der Erstreckung des Erntevorsatzes bewegt wird: Wenn beim Freischneiden, das heißt beim Mähen der ersten Gasse bereits ein Abtankvorgang erforderlich wird, müssten der Ackerschlepper und der Sammelbehälter, sofern diese sich außerhalb der Erstreckung des Erntevorsatzes bewegen, entweder im noch nicht geernteten Halmgut oder einem benachbarten Feld fahren. Dadurch würden unnötige Spuren und somit Ernteverluste verursacht werden. Demgegenüber treten diese Schäden erfindungsgemäß weder in dem noch nicht geernteten Halmgut noch in einem Bestand auf einem Nachbargrundstück ein, denn der von der Zugmaschine gezogene Sammelbehälter wird in einer vom Mähdrescher bereits abgeernteten Gasse bewegt. Ähnliche Verhältnisse ergeben sich dann, wenn auf relativ großen Schlägen nur an einer Bestandskante geerntet wird, so dass sich das Korntankauslaufrohr bei jeder zweiten Fahrt auf der Bestandsseite befindet. Außerdem soll bei großen Schlägen zum Teil auch vermieden werden, lange auf dem Vorgewende des entsprechenden Schlags zu mähen. Das führt dazu, dass wiederholt ein Freischneiden innerhalb des Bestands erfolgen muss, bei dem ebenfalls keine Gasse zum Befahren durch des Sammelbehälter zur Verfügung stehen würde, wenn dieser nicht innerhalb der Erstreckung des Erntevorsatzes bewegt werden könnte.

Da inzwischen kaum noch Möglichkeiten bestehen, das beim Erntevorgang anfallende Stroh und die Spreu einer besonderen Verwendung als Futtermittel oder Streu zuzuführen, sind nahezu alle Mähdrescher mit einem am Stroh- und Spreuausgang angeordneten Häcksler versehen, der für eine ausreichende Zerkleinerung und Verteilung dieser Bestandteile sorgt, damit sie während der anschließenden Bodenbearbeitung gleichmäßig in die obere Bodenschicht eingearbeitet werden können, um zur Erzielung einer optimalen Bodengare eingearbeitet zu werden. Erfindungsgemäß soll der Mähdrescher einen entsprechenden Häcksler mit einer verstellbaren Leiteinrichtung zur Einstellung der Breite einer Stroh- und Spreuverteilung aufweisen, wobei die Leiteinrichtung aufgrund eines vom Sammelbehälter übertragenen Signals selbsttätig in eine Stellung bewegbar ist, in welcher die Breite der Verteilung derart einseitig reduziert wird, dass sie außerhalb einer Fahrgasse des Sammelbehälters liegt. Die entsprechenden Leiteinrichtungen des Häckslers, die vorzugsweise hydraulisch verstellbar sind, nehmen somit eine asymmetrische Verteilung des zerkleinerten Strohs und der Spreu vor. Diese Verstellung der Leiteinrichtung des Häckslers, die vorzugsweise selbsttätig erfolgt, kommt dann zum Einsatz, wenn der fahrbare Sammelbehälter in seine Position neben dem Mähdrescher bewegt wird. Nach dem Abtanken des Korntanks und dem Entfernen des Sammelbehälters wird die Leiteinrichtung wieder in ihre normale Verteilfunktion verstellt, so dass Stroh und Spreu wieder über die gesamte Arbeitsbreite des Mähdreschers verteilt werden. Auf diese Weise wird verhindert, dass sich das Häckselgut am Transportbehälter sammelt und somit Anhäufungen oder eine Schwad aus Häckselgut bilden. Diese Anhäufungen oder Häckselgutschwade können bei der anschließenden Bodenbearbeitung Probleme bereiten und im Boden Strohnester bilden, die an diesen Stellen die Entwicklung der Bodengare beeinträchtigen. Außerdem wäre ohne diese Verstellung der Leiteinrichtung des Häckslers eine erhebliche Belastung der Luft mit feinen Stroh bestandteilen und Staub im Bereich des Sammelbehälters zu verzeichnen, die sich ungünstig auf den Abtankvorgang auswirken und die unter ungünstigen Windverhältnissen sogar das im Inneren des Sammelbehälters befindliche Erntegut verunreinigen können.

Gemäß einer vorteilhaften Ausgestaltung der Erfindung soll die Befülleinrichtung des Sammelbehälters zumindest einen in Längsrichtung des Sammelbehälters wirkenden Längsförderer aufweisen. Dieser Längsförderer transportiert das dem Sammelbehälter zugeführte Erntegut in der Weise, dass sich eine gleichmäßige Verteilung des Erntegutes im Sammelbehälter bis zum Erreichen von dessen maximalen Füllvolumen erzielen lässt. Dabei kann der Längsförderer als zumindest eine Förderschnecke oder als Kettenförderer ausgebildet sein. Es kann sich aber auch um andere Arten von Längsförderern handeln, die kontinuierlich oder in Intervallen eine Verteilung des Erntegutes vornehmen.

Weiterhin kann der Längsförderer in einer Förderrinne angeordnet sein, wobei an der Förderrinne unterschiedliche Austrittsbereiche mit unterschiedlichen Austrittsquerschnitten einstellbar sind. Diese verstellbaren Austrittsquerschnitte oder alternativ dazu Leitelemente sorgen für eine gleichmäßige Verteilung des Erntegutes, und sie können über Messeinrichtungen, die den Füllstand im Sammelbehälter überwachen oder in Abhängigkeit von anderen Parametern verstellt werden. Beispielsweise könnte die Verstellfunktion beeinflusst werden, wenn ein Abtanken des Mähdreschers in einer Schräglage am Hang erfolgt, damit dies nicht zu einer einseitigen Beladung des Sammelbehälters führen kann.

Die Zuführung des Erntegutes über den Auslaufstutzen des Korntankauslaufrohrs kann dabei, bezogen auf die Längserstreckung des Sammelbehälters, mittig erfolgen. In diesem Fall weist die Befülleinrichtung zumindest zwei in entgegengesetzten Förderrichtungen wirkende Längsförderer auf. Alternativ dazu kann der Zulauf des Ernteguts aber auch an einem Ende des Sammelbehälters erfolgen, wobei dann zumindest ein in einer Förderrichtung wirkender Längsförderer vorgesehen ist.

Gemäß einer weiteren Ausgestaltung der Erfindung soll der Sammelbehälter an einem seiner Enden seinen Beladetrichter aufweisen, von dem der zumindest eine Längsförderer ausgeht. Dieser Beladetrichter kann beispielsweise den Sammelbehälter, der vorzugsweise eine rechteckige Grundfläche aufweist, in Richtung des Mähdreschers überragen. In allen vorgenannten Ausführungsformen der Befülleinrichtung kann diese als separate Baueinheit ausgebildet sein, die auf den Sammelbehälter aufsetzbar ist, so dass der fahrbare Sammelbehälter nach einfacher Demontage der Befülleinrichtung auch für andere landwirtschaftliche Transportarbeiten nutzbar ist.

Weiterhin besteht die Möglichkeit, als Antriebseinheit für den Sammelbehälter einen Geräteträger, vorzugsweise ein Trac-Fahrzeug vorzusehen, das über einen hinteren Anbauraum beziehungsweise eine hintere Ladefläche verfügt. Auf diesem hinteren Anbauraum beziehungsweise der Ladefläche soll ein Zwischenspeicher angeordnet sein, der über das Korntankauslaufrohr des Mähdreschers befüllt wird. Von diesem Zwischenspeicher wiederum geht ein Zwischenförderer aus, der in einen Eintrittsbereich des im Sammelbehälter angeordneten Längsförderers mündet. Vorzugsweise ist dabei der Zwischenförderer schwenkbar an dem Zwischenspeicher geführt, so dass auch im Falle von Lenkbewegungen des Geräteträgers der Auslass des Zwischenförderers eine konstante Position am Sammelbehälter beibehalten kann.

Außerdem sollen im oberen Randbereich des Sammelbehälters Sensoren zur Überwachung eines Befüllzustands angeordnet sein, über welche der oder die Längsförderer steuerbar sind. Es ist dabei zweckmäßig, diese Sensoren unterschiedlichen Sektoren des Sammelbehälters zuzuordnen, damit aufgrund der von den Sensoren an eine Zentraleinheit übermittelten einzelnen Daten der Längsförderer beziehungsweise die zuvor erläuterten Einrichtungen zur Veränderung von Austrittsquerschnitten in der Förderrinne oder entsprechende Leiteinrichtungen so verstellt werden, dass sich eine gleichmäßige Befüllung des Sammelbehälters bis zu einem maximalen Füllstand ergibt.

Zusätzlich zu den bereits erläuterten Einrichtungen soll am Förderrohr der Erntemaschine oder an dessen Auslaufstutzen eine Kamera angeordnet sein, die mit einem in einer Kabine der Erntemaschine vorgesehenen Monitor in Verbindung steht. Über diesen Monitor kann der Fahrer der Erntemaschine neben den vorgesehenen automatischen Überwachungsfunktionen noch eine Kontrollfunktion ausüben, um eventuelle Probleme erkennen und bei deren Auftreten manuell eingreifen zu können.

Außerdem kann die erfindungsgemäße Erntevorrichtung derart ausgebildet sein, dass in einem Zuführbereich des Längsförderers ein den Eintritt des Ernteguts aus dem Auslaufstutzen in den Längsförderer überwachender Ultraschallsensor am Sammelbehälter angeordnet ist, der mit einem Monitor oder einem die Position des Sammelbehälters steuernden Navigationssystem verbunden ist. Diese Einrichtung soll alternativ zu der bereits erläuterten Kamera oder in Kombination mit der Kamera vorgesehen sein und neben der Positionierung des Sammelbehälters zum Mähdrescher über das Navigationssystem eine zusätzliche Überwachungsfunktion übernehmen, die eine selbsttätige Korrektur vornimmt oder den Fahrer der Erntemaschine zu einer zusätzlichen Korrektur auffordert.

Schließlich betrifft die Erfindung auch ein Verfahren zum Abtanken eines in einem Korntank eines selbstfahrenden Mähdreschers gespeicherten Erntegutes in einen mit einer Antriebseinheit versehenen fahrbaren Sammelbehälter, wobei der Sammelbehälter relativ zu der Erntemaschine positioniert und parallel zu dieser bewegt wird und dabei das Erntegut gleichzeitig mit dem Erntebetrieb über ein mit einem Auslaufstutzen versehenes Förderrohr dem Sammelbehälter mittelbar oder unmittelbar zugeführt wird. Dabei soll der Sammelbehälter zum Abtanken des Erntegutes mittels einer Steuereinrichtung in einer konstanten relativen Position zur Erntemaschine, hinter einem Erntevorsatz oder neben einem Erntevorsatz verfahren werden, in der der Auslaufstutzen zu einem Eintrittsbereich eines im Sammelbehälter vorgesehenen Längsförderers ausgerichtet ist. Damit wird ein Verfahren geschaffen, mit welchem die zuvor im Zusammenhang mit den Vorrichtungsansprüchen erläuterten Vorteile erzielbar sind. Es besteht die Möglichkeit, die Ernte von Getreide, Mais, Raps oder anderen Hülsenfrüchten mit geringem Personalaufwand durchzuführen, da der Fahrer des Mähdreschers sich im Wesentlichen auf die Bedienung des Mähdreschers konzentrieren kann, während das übrige Verfahren zum Abtanken des Korntanks weitestgehen selbsttätig abläuft. Es ist nur erforderlich, dass weiteres Personal den befüllten Sammelbehälter durch einen leeren Sammelbehälter ersetzt und abtransportiert. Im Rahmen dieses Verfahrens wird auch die Streubreite des an den Mähdrescher angebauten Häckslers variiert und mittels Sensoren eine gleichmäßige sowie maximale Befüllung des Sammelbehälters überwacht.

Schließlich ist gemäß dem Verfahren die Ermittlung der jeweiligen Position des Mähdreschers und des Sammelbehälters mittels eines oder zweier miteinander kommunizierender Navigationssysteme vorgesehen, wobei alternativ dazu auch eine zwischen Mähdrescher und Sammelbehälter bestehende Funkstrecke eine Position des Sammelbehälters abgleichen kann. Dabei soll unter Weiterbildung dieses Verfahrens eine zusätzliche Überwachungsfunktion geschaffen werden, bei welcher Abstandssensoren vorgesehen sind, die den jeweiligen Abstand zwischen dem Mähdrescher und dem Sammelbehälter überwachen und beim Über- oder Unterschreiten dieses Abstands einen diesen korrigierenden Lenkvorgang an der Zugmaschine des Sammelbehälters auslösen.

Es liegt es im Rahmen der Erfindung, dass der Längsförderer auch im Bereich des Bodens des Sammelbehälters angeordnet ist, beispielsweise in Gestalt eines Rollbodens oder als zumindest eine am Boden angeordneten Förderschnecke.

Weitere Merkmale der Erfindung ergeben sich im Übrigen aus der nachfolgenden Beschreibung und aus den Zeichnungen, in denen sechs Ausführungsbeispiele der erfindungsgemäßen Erntevorrichtung sowie fünf Ausführungsbeispiele eines erfindungsgemäßen Sammelbehälters dargestellt sind. Es zeigen:
- Figur 1: eine Rückansicht eines selbstfahrenden Mähdreschers und eines neben diesem positionierten fahrbaren Sammelbehälters,
- Figur 2: schematische eine verkleinerte Draufsicht auf die Erntevorrichtung gemäß Figur 1,
- Figur 3: schematisch in einer Draufsicht eine Erntevorrichtung, bei der der selbstfahrende Mähdrescher mit einem Häcksler versehen ist, der das Häckselgut neben der Fahrspur des Sammelbehälters platziert,
- Figur 4: schematisch in einer Draufsicht eine Erntevorrichtung, bei der das Erntegut in einen vorderen Beladetrichter des Sammelbehälters befördert wird,
- Figur 5: schematisch in einer Draufsicht eine Erntevorrichtung, bei welcher das Erntegut auf einen Zwischenspeicher befördert wird, der auf einer Ladefläche eines den Sammelbehälter ziehenden Trac-Fahrzeuges vorgesehen ist,
- Figur 6: schematisch in einer Draufsicht eine Erntevorrichtung, bei welcher der Sammelbehälter außerhalb der Erstreckung eines Erntevorsatzes des Mähdreschers parallel zu diesem bewegt wird,
- Figur 7: schematisch in einer Draufsicht eine Erntevorrichtung, bei der sich der Sammelbehälter ebenfalls außerhalb der Erstreckung des Mähdreschers parallel zu diesem bewegt, wobei der Sammelbehälter über einen seitlichen Beladetrichter verfügt,
- Figur 8: eine schematische Seitenansicht eines mit einer Förderschnecke versehenen Sammelbehälters, mit einer Zuführung des Ernteguts am vorderen Ende des Sammelbehälters,
- Figur 9: eine schematische Darstellung einer Seitenansicht eines Sammelbehälters, bei welchem das Erntegut einer Befülleinrichtung im mittleren Bereich des Sammelbehälters zugeführt wird,
- Figur 10: schematisch in einer Seitenansicht einen Sammelbehälter, mit Sensoren zur Überwachung des Befüllzustands dieses Sammelbehälters,
- Figur 11: schematisch in einer Seitenansicht einen Sammelbehälter, bei welchem die Zuführung des Ernteguts über einen Ultraschallsensor überwacht wird,
- Figur 12: schematisch in einer Seitenansicht einen Sammelbehälter, bei dem die Zuführung des Ernteguts mittels einer Kamera überwacht wird,
- Figur 14: ein Ablaufschema in Form eines Flussdiagrammes für ein Verfahren, nach dem das in einem Korntank eines Mähdreschers gesammelte Erntegut in einen Sammelbehälter abgetankt wird und

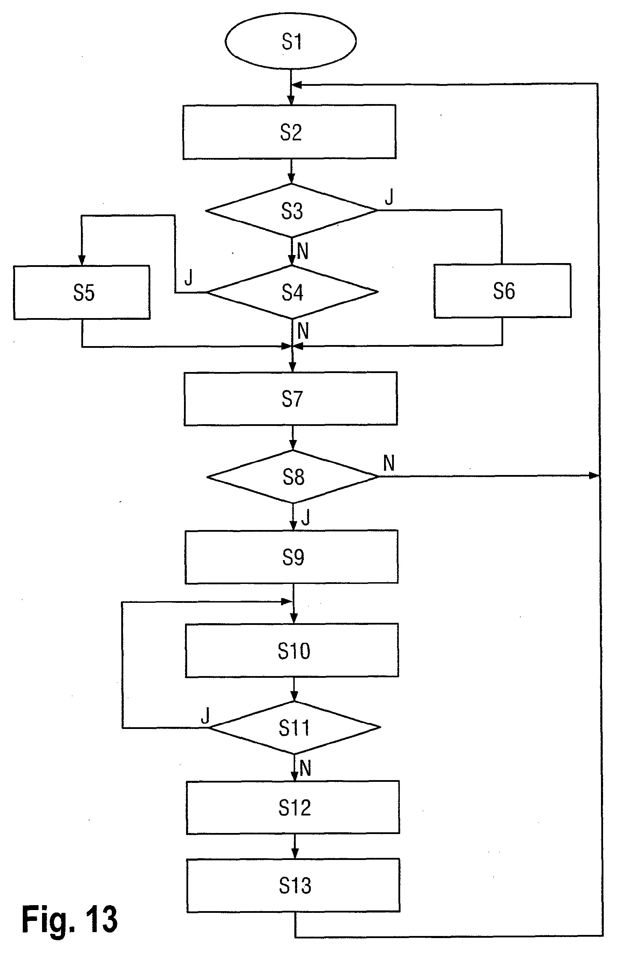

- Figur 13: ein Ablaufschema in Form eines Flussdiagrammes für ein Verfahren, nach dem das von einem Korntankauslaufrohr in eine Befülleinrichtung geförderte Erntegut in einem Sammelbehälter bis zur Erreichung eines im gesamten Sammelbehälter vorgegebenen maximalen Füllstands verteilt wird.

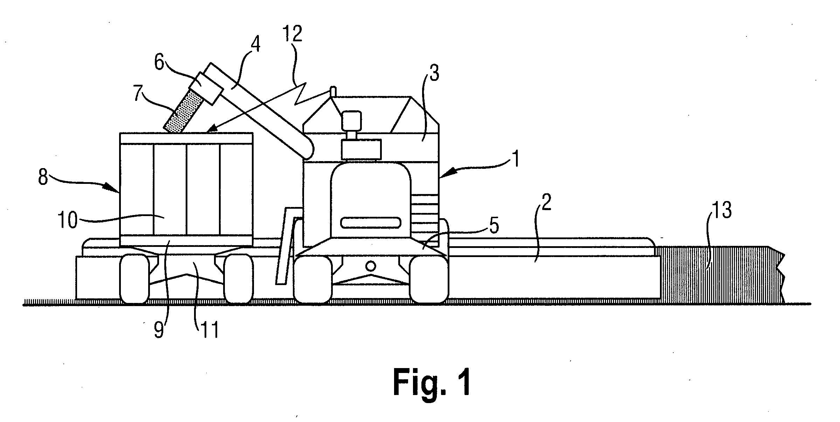

In der Figur 1 ist mit 1 ein selbstfahrender Mähdrescher bezeichnet, der in seinem Frontbereich einen vorzugsweise austauschbaren Erntevorsatz 2 aufnimmt. Dieser Erntevorsatz 2 weist eine relativ große Arbeitsbreite auf und erstreckt sich somit beidseitig in erheblichem Maße über die Breite des Mähdreschers 1, also über die Breite von dessen Fahrwerk, Dreschwerk usw. Bei dem Erntevorsatz 2 handelt es sich vorzugsweise um ein Schneidwerk zur Ernte von Getreide oder Raps. Ferner weist der Mähdrescher 1 in seinem mittleren Bereich, hinter einer nicht näher dargestellten Fahrerkabine, einen Korntank 3 auf, von welchem ein als Korntankauslaufrohr 4 ausgebildetes Förderrohr an einer, in Fahrtrichtung gesehen, linken Längsseite des Mähdreschers 1 ausgeht. Dieses Korntankauslaufrohr 4 ist in die in der Figur 1 dargestellte Stellung für eine Entleerung des Korntanks 3 ausschwenkbar. Das Korntankauslaufrohr 4 kann aber auch in eine Transportstellung des Mähdreschers 1 überführt werden, in der es parallel zu dessen Längserstreckung verläuft.

Weiterhin weist das Korntankauslaufrohr 4 in seinem Inneren eine nicht näher dargestellte Förderschnecke auf, die zur Entleerung des Korntanks 3 dient. Während der Getreideernte gelangen Stroh und Spreu über nicht näher dargestellte Hordenschüttler und Siebe zum hinteren Ende des Mähdreschers 1 und in einen dort angeordneten Häcksler 5, der für eine Zerkleinerung und gleichmäßige Verteilung des Strohs und der Spreu über die vom Mähdrescher 1 abgeerntete Fläche des Feldes, also auf die Stoppeln sorgt. Das Korntankauslaufrohr 4 weist einen abgewinkelten Auslaufstutzen 6 auf, der das durch das Korntankauslaufrohr 4 geförderte Erntegut derart umlenkt, dass es als Erntegutstrom 7 in einen neben dem Mähdrescher 1 angeordneten Sammelbehälter 8 gelangt.

Dieser Sammelbehälter 8 weist zum einen geschlossenen Boden 9 und zum anderen eine umlaufende Seitenwand 10 beziehungsweise einzelne Seitenwände auf, wobei der Sammelbehälter 8 an seiner Oberseite zumindest partiell mit einer Öffnung versehen ist. Außerdem ist der fahrbare Sammelbehälter 8 auf einem Fahrwerk 11 angeordnet, so dass er während eines Abtankvorgangs unter Fortsetzung des Erntevorgangs parallel zum Mähdrescher 1 in einer festen relativen Position zu diesem bewegt werden kann. In der Figur 1 ist weiterhin dargestellt, dass von dem Mähdrescher 1 über eine Funkstrecke 12 zwischen dem Mähdrescher 1 und einer in dieser Figur nicht näher dargestellten Antriebseinheit des Sammelbehälters 8 Daten übertragen werden. Schließlich ist in dieser Figur noch neben dem Erntevorsatz 2 der noch nicht abgeerntete Halmgutbestand 13 dargestellt. Für die in der Figur 1 erläuterten Vorrichtungen und Bauelemente werden in den nachfolgenden Figuren die gleichen Bezugszeichen verwendet.

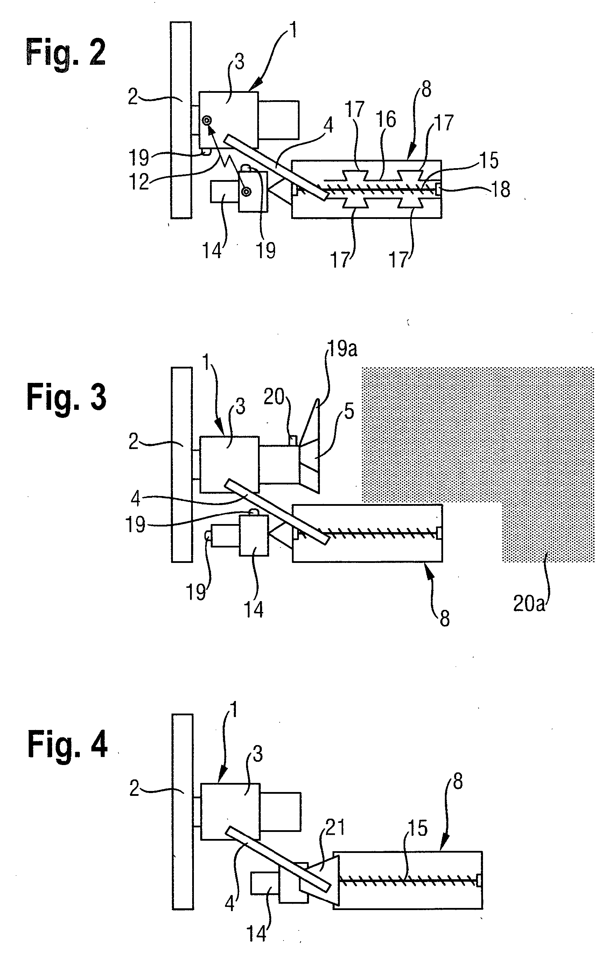

Der Figur 2 ist im Wesentlichen die gleiche Anordnung, die vorstehend zur Figur 1 erläutert wurde, zu entnehmen, wobei es sich allerdings um eine stark schematisierte und verkleinerte Darstellung dieser Anordnung in einer Draufsicht handelt. Entsprechende stark schematisierte Darstellungen, ebenfalls in einer Draufsicht, zeigen auch die Figuren 3 bis 7.

Der Figur 2 kann weiterhin entnommen werden, dass der Sammelbehälter 8 von einem Ackerschlepper 14, der somit eine mittelbare Antriebseinheit des Sammelbehälters 8 bildet, gezogen wird. Dieser Ackerschlepper 14 steht über die bereits im Zusammenhang mit der Figur 1 erwähnte Funkstrecke 12 mit dem Mähdrescher 1 in Verbindung. Außerdem soll zumindest der Mähdrescher 1 über ein Navigationssystem verfügen, über welches die jeweilige Position des Mähdreschers 1 per GPS erfassbar ist. Auch der Ackerschlepper 14 kann ein Navigationssystem aufweisen, wobei diese beiden Systeme derart aufeinander abgestimmt sein müssen, dass sich der Mähdrescher 1 und der vom Ackerschlepper 14 gezogene Sammelbehälter 8 konstant zueinander positioniert bewegen. Aus der Figur 2 geht weiterhin hervor, dass sich der Erntevorsatz 2 des Mähdreschers 1 beidseitig über diesen hinaus erstreckt und dass sich der vom Ackerschlepper 14 gezogene Sammelbehälter 8 hinter diesem Erntevorsatz 2, also innerhalb von dessen Erestreckung, bewegt. Während der Erntevorgang fortgesetzt wird, also das Halmgut gemäht, gedroschen und aufbereitet wird, erfolgt gleichzeitig eine Entleerung des Korntanks 3 über das ausgeschwenkte Korntankauslaufrohr 4. Dieses endet in Figur 2 im vorderen Bereich des Sammelbehälters 8 und führt über den in der Figur 2 nicht dargestellten Auslaufstutzen 6 das Erntegut einer als Förderschnecke 15 ausgebildeten Befülleinrichtung zu.

Dabei erfolgt die Zuführung im vorderen Bereich des Sammelbehälters 8, und die Förderschnecke 15 transportiert als Längsförderer das Erntegut in die anderen Bereiche des Sammelbehälters 8. Die Förderschnecke 15 kann dabei, wie in Figur 2 dargestellt, innerhalb einer Förderrinne 16 angeordnet sein, die über mehrere verstellbare Austrittsbereiche 17 verfügt. In der Darstellung befindet sich am hinteren Ende des Sammelbehälters 8 ein Sensor 18 zur Überwachung des Befüllzustandes des Sammelbehälters 8. Außerdem sind sowohl am Mähdrescher 1 als auch am Ackerschlepper 14 Abstandssensoren 19 angeordnet, die unabhängig von der Steuerung der beiden Fahrzeuge 1 und 14 beziehungsweise 8 über das Navigationssystem eine zusätzliche Sicherheitsfunktion übernehmen, das heißt, eine eventuelle Kollision der beiden Fahrzeuge 1 und 8 beziehungsweise 14 verhindern.

Die Darstellung nach der Figur 3 stimmt im Wesentlichen mit der nach der Figur 2 überein, weshalb auch die gleichen Bezugszeichen verwendet werden. In der Figur 3 ist der Mähdrescher 1 in Übereinstimmung mit Figur 1 mit einem Häcksler 5 versehen. Dabei weist der Häcksler 5 eine Leiteinrichtung 19 zur Einstellung einer Stroh- und Spreuverteilung hinter dem Mähdrescher auf. Diese Leiteinrichtung 19 ist über ein Stellelement 20 derart verstellbar, dass eine Streubreite 20a einseitig hinter dem Mähdrescher 1 reduziert werden kann. Wie aus der Figur 3 hervorgeht, werden die gehäckselten Bestandteile nur in einem Bereich auf die Stoppeln aufgetragen, der außerhalb des vom Sammelbehälter 8 überfahrenen Bereichs liegt.

Die Anordnung nach der Figur 4 unterscheidet sich von den Figuren 2 und 3 nur dadurch, dass im vorderen Bereich des Sammelbehälters 8 ein Beladetrichter 21 vorgesehen ist, in welchen das Korntankauslaufrohr 4 einmündet. Von diesem Beladetrichter 21 geht in diesem Fall die Förderschnecke 15 aus. Wie weiterhin aus der Figur 4 hervorgeht, befindet sich dieser Beladetrichter 21 in einem Bereich oberhalb einer Deichsel, über die der fahrbare Sammelbehälter 8 an den Ackerschlepper 14 gekuppelt ist.

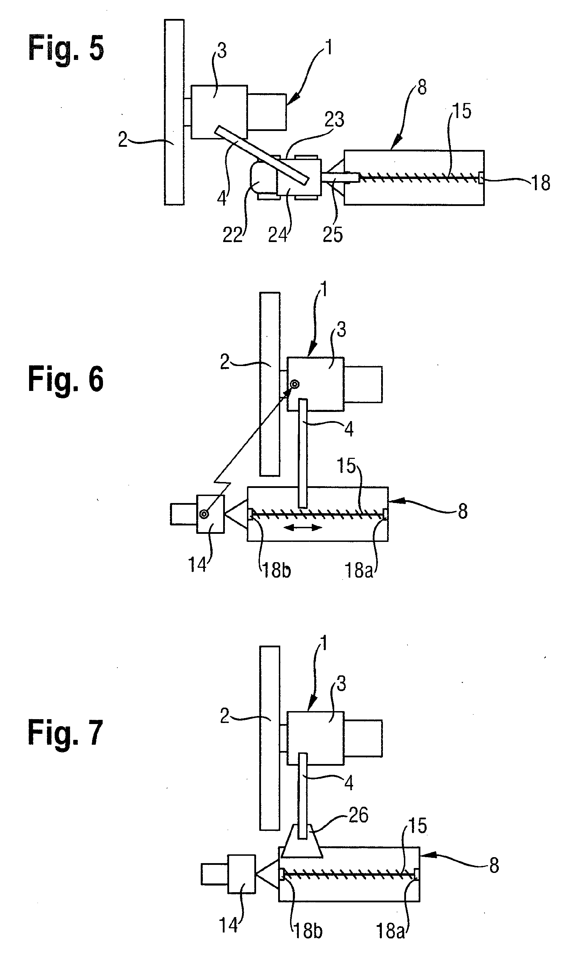

Gemäß Figur 5 wird der fahrbare Sammelbehälter 8 von einem Trac-Fahrzeug 22 gezogen, wobei dieses Trac-Fahrzeug 22 eine hintere Ladefläche 23 aufweist. Auf dieser Ladefläche 23 ist ein Zwischenspeicher 24 vorgesehen, von dem aus das Erntegut über einen Zwischenförderer 25 zu der im Sammelbehälter 8 angeordneten Förderschnecke 15 gefördert wird. Dort übernimmt die Förderschnecke 15 zusammen mit nicht näher dargestellten Leiteinrichtungen die Verteilung des Ernteguts im Sammelbehälter 8.

Die Figuren 6 und 7 zeigen eine Anordnung, bei der der Sammelbehälter 8 ebenfalls eine synchrone Bewegung zum Mähdrescher 1 ausführt. Dabei befindet sich der vom Ackerschlepper 14 gezogene Sammelbehälter 8 aber außerhalb der Erstreckung des Erntevorsatzes 2. Diese Position gegenüber dem Mähdrescher kann der Sammelbehälter nur dann einnehmen, wenn nicht im vollen Bestand gemäht wird oder sich das Korntankauslaufrohr 4 zu keinem Zeitpunkt auf der Seite des ungemähten Bestandes befindet. Nach der Figur 6 soll das Korntankauslaufrohr 4 mittig des Sammelbehälters 8 enden und somit die zumindest eine Förderschnecke 15 in entgegengesetzte Richtungen des Sammelbehälters 8 fördern. Dabei kann die Förderschnecke 15 geteilt sein, wobei die beiden Teile mit unterschiedlichen Drehrichtungen angetrieben werden; es kann sich aber auch um eine Welle mit gegenläufigem Schneckenverlauf handeln, so dass bei gleicher Drehrichtung der beiden Abschnitte eine Förderung in Richtung der beiden Enden des Sammelbehälters 8 erfolgt. Gemäß Figur 7 wird das Erntegut seitlich im vorderen Bereich des Sammelbehälters 8 zugeführt, wobei zu diesem Zweck ein seitlicher Beladetrichter 26 vorgesehen ist. Über diesen Beladetrichter 26 gelangt das Erntegut in den Zulaufbereich der Förderschnecke 15.

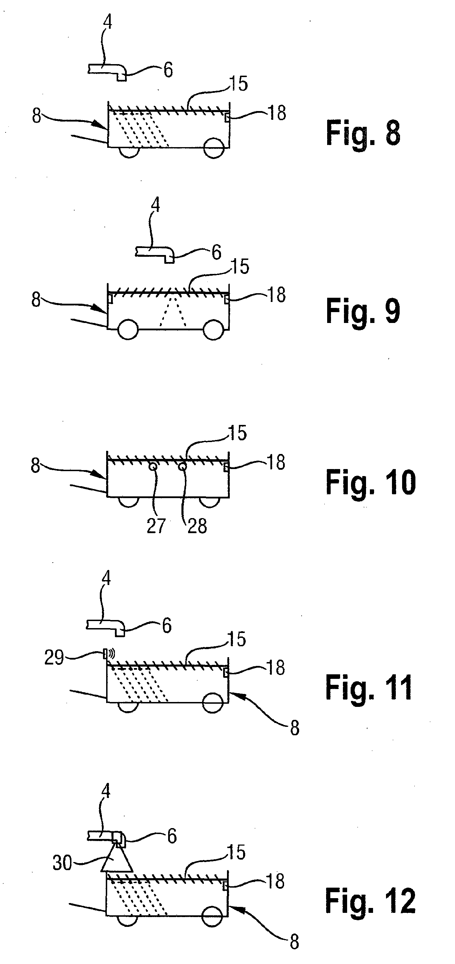

Ergänzende Informationen bezüglich der erfindungsgemäßen Ausbildung des Sammelbehälters 8 und der Befülleinrichtung sind den Figuren 8 bis 12 zu entnehmen.

In der Figur 8 wird in Übereinstimmung mit der Figur 2 das Erntegut mittels des Korntankauslaufrohrs 4 und dessen Auslaufstutzens 6 im vorderen Bereich des Sammelbehälters 8 zugeführt, wobei die Förderschnecke 15 das Erntegut über die gesamte Länge des Sammelbehälters 8 verteilt. In Figur 9 erfolgt die Zuführung des Ernteguts in der Mitte des Sammelbehälters 8, wie in Figur 6 vorgesehen. Dabei kann sich der Sammelbehälter 8 aber auch im Gegensatz zu der Anordnung nach Figur 6 gemeinsam mit dem Ackerschlepper 14 innerhalb der Erstreckung des Erntevorsatzes 2 befinden.

Nach Figur 10 sind im oberen Bereich des Sammelbehälters 8 weitere Sensoren 27 und 28 zur Überwachung eines Befüllzustandes des Sammelbehälters 8 in seinem mittleren Bereich vorgesehen, um eine vollständige Befüllung zu erzielen. Nach den Figuren 11 und 12 soll die Zuführung des Ernteguts zur Förderschnecke 15 überwacht werden. Zu diesem Zweck ist gemäß Figur 11 ein Ultraschallsensor 29 vorgesehen, der den Erntegutstrom 7 überwacht und über das entsprechende elektronische System Fehlfunktionen an einen nicht näher dargestellten, in der Fahrerkabine des Mähdreschers 1 angeordneten Monitor meldet. Die gleiche Funktion kann gemäß Figur 12 eine Kamera 30 übernehmen, die über ein Bildverarbeitungssystem entsprechende Meldungen an den Monitor überträgt.

Der entsprechende Abtankvorgang aus dem Mähdrescher 1 in den Sammelbehälter 8 und die dafür erforderliche Positionierung der Fahrzeuge Mähdrescher 1 sowie die jeweils einen Sammelbehälter ziehenden Ackerschlepper 14 beziehungsweise Trac-Fahrzeuge 22 zueinander geht aus dem Ablaufschema gemäß Figur 13 hervor, das als Flussdiagramm gestaltet ist. Nachdem unter einem Verfahrensschritt S1 eine Abtankautomatik eingeschaltet wird, erfolgt unter einem Verfahrensschritt S2 eine Festlegung dahingehend, in welcher Position das Abtanken des Ernteguts erfolgen soll, nämlich mit Verfahrensschritt A1 hinter dem Erntevorsatz 2 oder mit Verfahrensschritt A2 neben dem Erntevorsatz 2. Daneben besteht eine Möglichkeit, diese Funktion auszuschalten. Weiterhin wird in dem nachfolgenden Verfahrensschritt S3 festgelegt, ob beim Abtanken hinter dem Erntevorsatz 2, also gemäß A1, ein Abtanken während des Betriebes eines Häckslers 5 erfolgt. Wenn das der Fall ist, wird über den Pfad "ja" nach Schritt S6 eine einseitig reduzierte Häckselgutverteilung aktiviert.

Dem Verfahrensschritt S3 folgt über einen Pfad "nein" ein Verfahrensschritt S4. Ist nach dem Verfahrensschritt S4 die Abtankfunktion "aus" oder fährt der Sammelbehälter 8 neben dem Erntevorsatz 2, so findet über den Pfad "ja" entsprechend einem Verfahrensschritt S 5 ein normaler Häckselbetrieb statt. Anschließend werden gemäß Verfahrensschritten S7 der Status des Sammelbehälters 8 und des Mähdrescher-Abtankvorganges ermittelt. Nach Schritt S8 wird geprüft, ob für den Sammelbehälter 8 und den Mähdrescher ein Abtankvorgang fei gegeben werden. Ist das nicht der Fall, so wird über den Pfad "nein" das System zurückgesetzt, das heißt, die Prozedur beginnt wieder nach dem Verfahrensschritt S1 der Einschaltung der Abtankautomatik. Über den Pfad "ja" wird die Prozedur fortgesetzt und somit unter Verfahrensschritt S9 die Abtankung eingeschaltet.

Unter dem Verfahrensschritt S10 werden der Status des Sammelbehälters 8 und des Mähdrescher-Abtankvorganges ermittelt, wobei unter S11 geprüft wird, ob der Abtankvorgang für den Mähdrescher 1 und den Sammelbehälter 8 frei gegeben ist. Ist das der Fall, so erfolgt eine entsprechende Meldung über den Pfad "ja", und der Vorgang wird fortgesetzt. Ist das nicht der Fall, so wird diese Meldung über den Pfad "nein" abgesetzt, und nachfolgend wird unter S12 der Abtankvorgang abgebrochen. Unter S13 erfolgen unterschiedliche Statusmeldungen, und zwar "Abtankvorgang aus", "Sammelbehälter voll", "Abtankposition verlassen" oder "Abtankung abgebrochen", die auf einen Monitor in der Fahrerkabine des Mähdreschers 1 und/oder des Ackerschleppers 14 bzw. Trac-Fahrzeugs 22 übertragen wird. Die gesamte Prozedur wird in diesem Fall zurückgesetzt auf eine Position nach dem Start der Abtankautomatik, also nach S1. Im Einzelnen wird bezüglich der einzelnen Verfahrensschritte auch auf die Erläuterungen in der Bezugszeichenliste verwiesen.

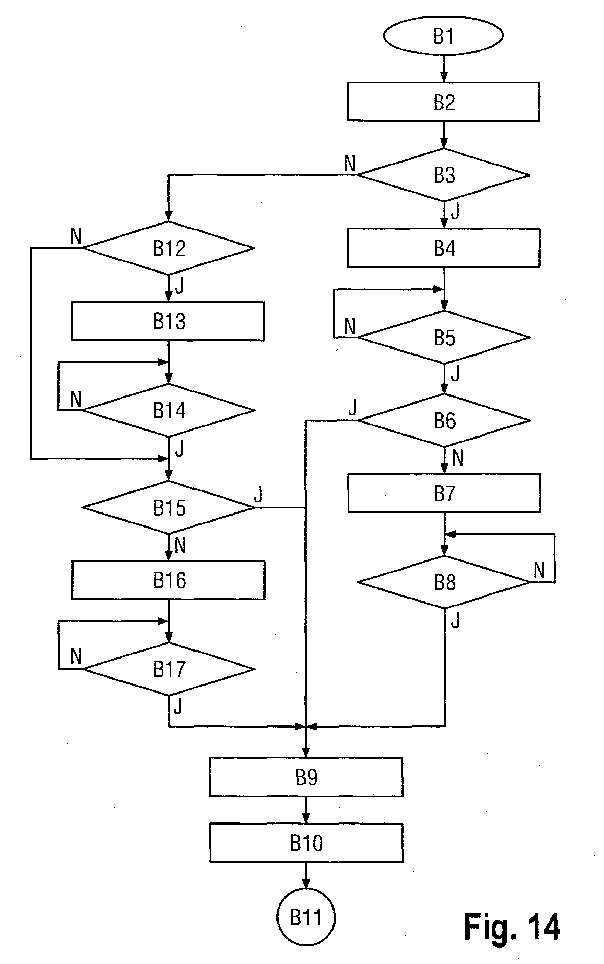

Aus der Figur 14 geht ein Flussdiagramm für die Befüllung des Sammelbehälters 8 hervor, die sich auf eine Befüllung des Sammelbehälters 8 bei einem Zulauf in dessen mittleren Bereich bezieht. Zunächst erfolgt gemäß B1 eine Aktivierung der Befüllautomatik, dann erfolgt nach B2 aus diesem Bereich eine Schneckenförderung in den vorderen Bereich, Position 1, oder hinteren Bereich, Position 2, des Sammelbehälters 8. In diesem Zusammenhang erfolgt eine Abfrage, ob bei einer Förderrichtung nach vorne, also Position 1, ein durch einen Sensor ermittelter Füllstand noch nicht die Position "voll" verzeichnet. Ist das der Fall, wird entsprechend dem Pfad "ja" gemäß dem Schritt B4 die Förderrichtung der Förderschnecke nach vorn eingeschaltet bzw. diese Einstellung beibehalten. Ist das nicht der Fall, so wird ein Pfad "nein" aktiviert, auf den später noch eingegangen werden wird.

Darauf folgend wird unter B5 abgefragt, ob der Füllstandssensor vorne einen Füllstand "voll" signalisiert. Wenn vorne der der maximale Füllstand noch nicht erreicht ist, wird über den Pfad "nein" bewirkt, dass die Befüllung im vorderen Bereich des Sammelbehälters fortgesetzt wird. Ist hingegen im vorderen Bereich der maximale Füllstand erreicht, so wird über den Pfad "ja" die Prozedur fortgesetzt auf B6, wo über einen weiteren Füllstandsensor geprüft wird, ob auch im hinteren Bereich des Sammelbehälters 8 ein maximaler Füllstand erreicht ist. Ist das der Fall, wird also der Pfad "ja" aktiviert, so wird unter B9 der Betrieb der Förderschnecke abgeschaltet, und unter B10 erfolgt eine Meldung "Sammelbehälter voll". Anschließend wird unter B11 die gesamte Befüllautomatik ausgeschaltet. Das Signal B8 weist außerdem eine Schleife "nein" auf, die bewirkt, dass der Befüllvorgang im hinteren Bereich des Sammelbehälters so lange fortgesetzt wird, bis der maximale Füllstand erreicht ist.

Ausgehend von der Abfrage unter B3 eröffnet der Pfad "nein" einen weiteren, zu dem zuvor Beschriebenen parallelen Ablauf: Dabei wird unter B12 ermittelt, ob bei einer Förderrichtung der Förderschnecke "nach hinten" und einem Signal, wonach der Sammelbehälter hinten nicht voll ist, die Förderschnecke nach hinten eingeschaltet wird bzw. diese Förderrichtung beibehalten wird (siehe Pfad "ja"), wodurch der Zustand nach B13 "Förderschnecke nach hinten ein" erzielt wird. Ist das nicht der Fall, ist also der Sammelbehälter unter Berücksichtigung dieser Förderrichtung der Förderschnecke eventuell voll, so erfolgt diese Abfrage weiterhin über den Pfad "nein" gemäß Signal B15. Wird dabei nach Pfad "ja" bestätigt, dass der Sammelbehälter 8 hinten voll ist, so wird die Befüllprozedur ebenfalls über B9, B10 und B11 beendet. Im Anschluss an B13 erfolgt nochmals unter B14 eine Abfrage, ob der maximale Füllstand hinter erreicht ist, wobei unter dem Pfad "nein" die Befüllprozedur fortgesetzt wird. Über den Pfad "ja" des Signals B14 wird die Prüfung durch B15 fortgesetzt. Unter B15 erfolgt die Routineabfrage, ob auch vorne der maximale Füllstand erreicht ist. Wenn das der Fall ist, wird über den Pfad "ja" und nachfolgend über B9, B10 und B11 der Betrieb der Förderschnecke insgesamt beendet. Über den Pfad "nein" von B15 wird der Zustand "Förderschnecke nach vorne ein" erzielt. Damit im Zusammenhang erfolgt nach B17 wiederum die Prüfung, ob der Füllstand "vorne = voll" ist. Auch in diesem Fall kann die entsprechend Befüllprozedur so lange fortgesetzt werden, bis dieser Zustand erreicht ist. Dann wird die Prozedur gemäß B9, B10 und B11 beendet. Im Zusammenhang mit den Einzelheiten dieses Befüllverfahrens wird ebenfalls auf die Erläuterungen in der Bezugszeichenliste verwiesen.

Mit der erfindungsgemäßen Erntevorrichtung und mit dem Verfahren, das mit der Erntevorrichtung durchgeführt werden kann, wird in vorteilhafter Weise der Sammelbehälter in einer festen relativen Position zum Mähdrescher 1 betrieben. Das Korntankauslaufrohr 4 wird zu Beginn des Abtankvorgangs ebenfalls in eine passende Zufuhrposition bewegt. Die Befülleinrichtung, die vorzugsweise aus zumindest einer Förderschnecke 15 besteht verteilt das Erntegut optimal im Sammelbehälter 8 und über Sensoren 18, 27 und 28 wird dann eine Meldung abgegeben, wenn der Sammelbehälter 8 vollständig gefüllt ist. Weiterhin ist von Vorteil, dass ein Abtankvorgang hinter dem Erntevorsatz 2 des Mähdreschers 1 erfolgen kann und dass bei eingeschaltetem Häcksler 5 die Verteilung des Häckselguts derart vorgenommen wird, dass dieses nicht in die Spur des Ackerschleppers 15 und des mit diesem verbundenen Sammelbehälters 8 gefördert wird. Außerdem ist eine Vielzahl von Überwachungsfunktionen vorgesehen, die dafür sorgen, dass auch unter ungünstigen Bedingungen der gesamte Erntegutstrom 7 dem Sammelbehälter zugeführt und auf diesem optimal verteilt wird.

### Bezugszeichenliste

- 1: Mähdrescher
- 2: Erntevorsatz
- 3: Korntank
- 4: Korntankauslaufrohr
- 5: Häcksler
- 6: Auslaufstutzen
- 7: Erntegutstrom
- 8: Sammelbehälter
- 9: Boden
- 10: Seitenwand
- 11: Fahrwerk von 8
- 12: Funkstrecke
- 13: Halmgutbestand
- 14: Ackerschlepper
- 15: Förderschnecke
- 16: Förderrinne
- 17: Austrittsbereiche
- 18: Sensor für Füllstand
- 19: Abstandssensoren
- 19a: Leiteinrichtung
- 20: Verstellelement
- 20a: Streubreite
- 21: Beladetrichter
- 22: Trac-Fahrzeug
- 23: hintere Ladefläche
- 24: Zwischenspeicher
- 25: Zwischenförderer
- 26: seitlicher Beladetrichter
- 27: Sensor
- 28: Sensor
- 29: Ultraschallsensor
- 30: Kamera
- S1: Abtankautomatik ein
- S2: Abtankposition einstellen Aus
A1 Abtanken hinter dem Erntevorsatz
A2 Abtanken neben dem Erntevorsatz
- S3: Erfolgt das Abtanken in Position A1 bei Häckselbetrieb?
- S4: Ist die Abtankposition "aus" oder A2 und reduzierte Häckselverteilung?
- S5: Normale Häckselverteilung
- S6: Reduzierte Häckselgutverteilung
- S7: Status Sammelbehälter und Status des Mähdrescher-Abtankvorgangs ermitteln
- S8: Sind der Abtankvorgang für den Mähdrescher und den Sammelbehälter frei gegeben?
- S9: Abtankung "ein"
- S10: Status Sammelbehälter und Mähdrescher-Abtankvorgang ermitteln
- S11: Sind der Abtankvorgang für den Mähdrescher und den Sammelbehälter frei gegeben? S12 Abtankung "aus"
- S13: CEBIS Meldung: (abhängig von der Statusmeldung) Abtankvorgang "aus", Sammelbehälter "voll", Abtankposition "verlassen", Abtankung "abgebrochen"

- B1: Befüllautomatik "ein"
- B2: Anfangs Förderrichtung der Förderschnecke einstellen
Position 1 - nach vorne
Position 2 - nach hinten
- B3: Ist Förderrichtung=1 und Sensor für Füllstand vorne = nicht voll?
- B4: Förderrichtung der Förderschnecke nach vorne "ein"
- B5: Ist Sensor für Füllstand vorne = voll?
- B6: Ist Sensor für Füllstand hinten = voll?
- B7: Förderrichtung der Förderschnecke nach hinten "ein"
- B8: Ist Füllstand hinten = "voll"?
- B9: Betrieb der Förderschnecke "aus"
- B10: Meldung "Sammelbehälter voll"
- B11: "Aus"
- B12: Ist Förderrichtung der Förderschnecke = 2 und hinten = nicht voll?
- B13: Förderrichtung der Förderschnecke nach hinten "ein"
- B14: Ist Sensor für Füllstand hinten = "voll"?
- B15: Ist Sensor für Füllstand vorne = "voll"?
- B16: Förderrichtung der Förderschnecke nach vorne "ein"
- B17: Ist Füllstand vorne = "voll"?

## Patentansprüche

1. Erntevorrichtung, bestehend aus einer selbstfahrenden Erntemaschine (1) und einem mit einer Antriebseinheit versehenen fahrbaren Sammelbehälter (8), der relativ zu der Erntemaschine (1) positionierbar und parallel zu dieser bewegbar ist und dem im Erntebetrieb über ein mit einem Auslaufstutzen (6) versehenes Förderrohr (4) ein Erntegut von der Erntemaschine (1) aus mittelbar oder unmittelbar zuführbar ist, mit einer Einrichtung zur gleichmäßigen Beschickung dieses Sammelbehälters, **dadurch gekennzeichnet, dass** eine Steuereinrichtung vorhanden ist mittels der Sammelbehälter (8) während der Förderung des Erntegutes in einer konstanten relativen Position zur Erntemaschine (1) bewegbar ist und dass der Sammelbehälter (8) eine Befülleinrichtung aufweist, mittels der eine gleichmäßige Verteilung des Erntegutes im Sammelbehälter (8) erzielbar ist.

2. Erntevorrichtung nach Anspruch 1, **dadurch gekennzeichnet, dass** die Erntemaschine als selbstfahrender Mähdrescher (1) ausgebildet ist, wobei das als Korntankauslaufrohr (4) ausgebildete Förderrohr von einem Korntank (3) des Mähdreschers (1) ausgeht.

3. Erntevorrichtung nach Anspruch 1, **dadurch gekennzeichnet, dass** die Erntemaschine (1) und die Antriebseinheit (14, 22) des fahrbaren Sammelbehälters (8) jeweils ein Navigationssystem aufweisen, über das sie während der Förderung des Erntegutes in einer konstanten relativen Position zueinander gehalten werden.

4. Erntevorrichtung nach Anspruch 2, **dadurch gekennzeichnet, dass** ein am Mähdrescher (1) angeordneter Erntevorsatz (2) eine derartige seitliche Erstreckung aufweist, dass er den Mähdrescher (1) beidseitig überragt und dass der Sammelbehälter (8) während der Förderung des Erntegutes über das Korntankauslaufrohr (4) eine Position im Wesentlichen innerhalb der Erstreckung des Erntevorsatzes (2) einnimmt.

5. Erntevorrichtung nach Anspruch 4, **dadurch gekennzeichnet, dass** der Mähdrescher (1) einen Häcksler (5) mit einer verstellbaren Leiteinrichtung (19a) zur Einstellung der Breite einer Stroh- und Spreuverteilung aufweist, wobei die Leiteinrichtung (19a) auf Grund eines vom Sammelbehälter (8) übertragenen Signals selbsttätig in eine Stellung bewegbar ist, in welcher die Breite derart einseitig reduziert ist, dass sie außerhalb einer Fahrgasse des Sammelbehälters (8) liegt.

6. Erntevorrichtung nach Anspruch 1, **dadurch gekennzeichnet, dass** die Befülleinrichtung des Sammelbehälters zumindest einen in Längsrichtung des Sammelbehälters (8) wirkenden Längsförderer aufweist.

7. Erntevorrichtung nach Anspruch 6, **dadurch gekennzeichnet, dass** der Längsförderer als zumindest eine Förderschnecke (15) oder als Kettenförderer ausgebildet ist.

8. Erntevorrichtung nach Anspruch 6, **dadurch gekennzeichnet, dass** das Förderelement in einer Förderrinne (16) angeordnet ist, wobei an der Förderrinne (16) unterschiedliche Austrittsbereiche (17) mit unterschiedlichen Austrittsquerschnitten einstellbar sind.

9. Erntevorrichtung nach Anspruch 6, **dadurch gekennzeichnet, dass** der Auslaufstutzen (6) des Korntankauslaufrohres (4) während der Förderung des Erntegutes, bezogen auf eine Längserstreckung des Sammelbehälters (8), eine etwa mittige Position einnimmt und dass sich aus dieser Position zumindest zwei in entgegengesetzten Förderrichtungen wirkende Längsförderer erstrecken.

10. Erntevorrichtung nach Anspruch 6, **dadurch gekennzeichnet, dass** der Sammelbehälter (8) an einem seiner Enden einen Beladetrichter (21) aufweist, von dem der Längsförderer ausgeht.

11. Erntevorrichtung nach Anspruch 6, **dadurch gekennzeichnet, dass** die Antriebseinheit als Geräteträger, vorzugsweise als Trac-Fahrzeug (22), ausgebildet ist, auf dessen Ladefläche (23) ein Zwischenspeicher (24) angeordnet ist, der über einen Zwischenförderer (25) mit einem Eintrittsbereich des im Sammelbehälter (8) angeordneten Längsförderers verbunden ist.

12. Erntevorrichtung nach Anspruch 6, **dadurch gekennzeichnet, dass** im oberen Randbereich des Sammelbehälters (8) Sensoren (18) zur Überwachung eines Befüllzustandes von diesen zugeordneten Sektoren des Sammelbehälters (8) angeordnet sind, über welche der Längsförderer steuerbar ist.

13. Erntevorrichtung nach Anspruch 1, **dadurch gekennzeichnet, dass** am Förderrohr oder an dessen Auslaufstutzen (6) eine Kamera (30) angeordnet ist, die mit einem in einer Kabine der Erntemaschine vorgesehenen Monitor in Verbindung steht.

14. Erntevorrichtung nach Anspruch 6, **dadurch gekennzeichnet, dass** in einem Zuführbereich des Längsförderers ein den Eintritt des Ernteguts aus dem Auslaufstutzen (6) in den Längsförderer überwachender Ultraschallsensor (29) am Sammelbehälter (8) angeordnet ist, der mit einem Monitor oder einem die Position des Sammelbehälters steuernden Navigationssystem verbunden ist.

15. Verfahren zum Abtanken eines in einem Korntank (3) eines selbstfahrenden Mähdreschers (1) gespeicherten Erntegutes in einen mit einer Antriebseinheit versehenen fahrbaren Sammelbehälter (8), wobei der Sammelbehälter (8) relativ zu dem Mähdrescher (1) positioniert und parallel zu diesem bewegt wird und dabei das Erntegut gleichzeitig mit dem Erntebetrieb über ein mit einem Auslaufstutzen (6) versehenes Korntankauslaufrohr (4) dem Sammelbehälter (8) mittelbar oder unmittelbar zugeführt wird, **dadurch gekennzeichnet, dass** der Sammelbehälter (8) zum Abtanken des Erntegutes mittels einer Steuereinrichtung in einer konstanten relativen Position zum Mähdrescher (1), hinter einem Erntevorsatz (2) oder neben einem Erntevorsatz (2) verfahren wird, in der der Auslaufstutzen (6) zu einem Eintrittsbereich eines im Sammelbehälter (8) vorgesehenen Längsförderers konstant ausgerichtet ist.

16. Verfahren zum Abtanken eines in einem Korntank (3) eines selbstfahrenden Mähdreschers (1) gespeicherten Erntegutes nach Anspruch 15, **dadurch gekennzeichnet, dass** bei einem Abtankvorgang mit hinter dem Erntevorsatz (2) fahrendem Sammelbehälter (8) eine in Richtung des Sammelbehälters (8) eingehaltene Streubreite eines Häckslers (5), der am Stroh- und Spreuaustritt des Mähdreschers (1) vorgesehen ist, reduziert wird.

17. Verfahren zum Abtanken eines in einem Korntank (3) eines selbstfahrenden Mähdreschers (1) gespeicherten Erntegutes nach Anspruch 15, **dadurch gekennzeichnet, dass** mittels Sensoren (18, 27, 28) eine gleichmäßige sowie maximale Befüllung des Sammelbehälters (8) überwacht werden.

18. Verfahren zum Abtanken eines in einem Korntank (3) eines selbstfahrenden Mähdreschers (1) gespeicherten Erntegutes nach Anspruch 15, **dadurch gekennzeichnet, dass** über ein Navigationssystem eine Position des Mähdreschers (1) ermittelt wird und mit dieser über das Navigationssystem oder eine zwischen Mähdrescher und Sammelbehälter bestehende Funkstrecke (12) eine Position des Sammelbehälters abgeglichen wird.

19. Verfahren zum Abtanken eines in einem Korntank (3) eines selbstfahrenden Mähdreschers (1) gespeicherten Erntegutes nach Anspruch 15, **dadurch gekennzeichnet, dass** über einen Abstandssensor (19) ein Unterschreiten eines minimalen Abstandes sowie ein Überschreiten eines maximalen Abstandes zwischen dem Mähdrescher (1) und dem Sammelbehälter (8) überwacht wird und eine Lenkwinkelkorrektur am Sammelbehälter (8) bzw. an dessen Antriebseinheit bewirkt.

## Claims

1. A harvesting apparatus comprising a self-propelled harvesting machine (1) and a moveable collecting container (8) which is provided with a drive unit and which can be positioned relative to the harvesting machine (1) and is moveable parallel thereto and to which in the harvesting operation a crop material can be directly or indirectly fed from the harvesting machine (1) by way of a conveyor pipe (4) provided with an outlet connection (6), having a device for uniformly loading that collecting container, **characterised in that** there is a control device, by means of which the collecting container (8) is moveable during conveyance of the crop material in a constant relative position with respect to the harvesting machine (1) and that the collecting container (8) has a filling device, by means of which it is possible to provide for uniform distribution of the crop material in the collecting container (8).

2. A harvesting apparatus according to claim 1 **characterised in that** the harvesting machine is in the form of a self-propelled combine harvester (1), wherein the conveyor pipe which is in the form of a grain tank discharge pipe (4) extends from a grain tank (3) of the combine harvester (1).

3. A harvesting apparatus according to claim 1 **characterised in that** the harvesting machine (1) and the drive unit (14, 22) of the moveable collecting container (8) each have a navigation system, by way of which they are kept in a constant relative position with respect to each other during conveyance of the crop material.

4. A harvesting apparatus according to claim 2 **characterised in that** a front harvesting attachment (2) arranged on the combine harvester (1) is of such a lateral extent that it projects beyond the combine harvester (1) on both sides and the collecting container (8) assumes a position substantially within the extent of the front harvesting attachment (2) during conveyance of the crop material by way of the grain tank discharge pipe (4).

5. A harvesting apparatus according to claim 4 **characterised in that** the combine harvester (1) has a chopper (5) having an adjustable guide device (19a) for adjusting the width of straw and chaff distribution, wherein the guide device (19a) is automatically moveable on the basis of a signal transmitted from the collecting container (8) into a position in which the width is reduced on one side in such a way that it lies outside a travel path of the collecting container (8).

6. A harvesting apparatus according to claim 1 **characterised in that** the filling device of the collecting container has at least one longitudinal conveyor acting in the longitudinal direction of the collecting container (8).

7. A harvesting apparatus according to claim 6 **characterised in that** the longitudinal conveyor is in the form of at least one conveyor screw (15) or in the form of a chain conveyor.

8. A harvesting apparatus according to claim 6 **characterised in that** the conveyor element is arranged in a conveyor channel (16), wherein different outlet regions (17) involving different outlet cross-sections can be set at the conveyor channel (16).

9. A harvesting apparatus according to claim 6 **characterised in that** the outlet connection (6) of the grain tank discharge pipe (4) assumes an approximately central position during conveyance of the crop material with respect to a longitudinal extent of the collecting container (8) and that at least two longitudinal conveyors acting in opposite conveying directions extend from said position.

10. A harvesting apparatus according to claim 6 **characterised in that** at one of its ends the collecting container (8) has a loading hopper (21) from which the longitudinal conveyor extends.

11. A harvesting apparatus according to claim 6 **characterised in that** the drive unit is in the form of a device carrier, preferably in the form of a Trac vehicle (22), on the load surface (23) of which is arranged an intermediate storage means (24) connected by way of an intermediate conveyor (25) to an inlet region of the longitudinal conveyor arranged in the collecting container (8).

12. A harvesting apparatus according to claim 6 **characterised in that** arranged in the upper edge region of the collecting container (8) are sensors (18) for monitoring a filling condition of sectors associated therewith of the collecting container (8), by way of which the longitudinal conveyor is controllable.

13. A harvesting apparatus according to claim 1 **characterised in that** arranged on the conveyor pipe or the outlet connection (6) thereof is a camera (30) connected to a monitor provided in a cab of the harvesting machine.

14. A harvesting apparatus according to claim 6 **characterised in that** arranged on the collecting container (8) in a feed region of the longitudinal conveyor is an ultrasound sensor (29) which monitors the entry of the crop material from the outlet connection (6) into the longitudinal conveyor and which is connected to a monitor or a navigation system controlling the position of the collecting container.

15. A method of unloading a crop material stored in a grain tank (3) of a self-propelled combine harvester (1) into a moveable collecting container (8) provided with a drive unit, wherein the collecting container (8) is positioned relative to the combine harvester (1) and is moved parallel thereto and in that situation the crop material is directly or indirectly fed to the collecting container (8) simultaneously with the harvesting operation by way of a grain tank discharge pipe (4) provided with an outlet connection (6), **characterised in that** for unloading the crop material the collecting container (8) is moved by means of a control device in a constant relative position with respect to the combine harvester (1) behind a front harvesting attachment (2) or beside a front harvesting attachment (2), in which the outlet connection (6) is constantly oriented relative to an inlet region of a longitudinal conveyor provided in the collecting container (8).

16. A method of unloading a crop material stored in a grain tank (3) of a self-propelled combine harvester (1) according to claim 15 **characterised in that** in a tank unloading operation with a collecting container (8) travelling behind the front harvesting attachment (2) a spreading width maintained in the direction of the collecting container (8) of a chopper (5) provided at the straw and chaff outlet of the combine harvester (1) is reduced.

17. A method of unloading a crop material stored in a grain tank (3) of a self-propelled combine harvester (1) according to claim 15 **characterised in that** a uniform and maximum filling of the collecting container (8) is monitored by means of sensors (18, 27, 28).

18. A method of unloading a crop material stored in a grain tank (3) of a self-propelled combine harvester (1) according to claim 15 **characterised in that** a position of the combine harvester (1) is ascertained by way of a navigation system and a position of the collecting container is compared therewith by way of the navigation system or a radio path (12) between the combine harvester and the collecting container.

19. A method of unloading a crop material stored in a grain tank (3) of a self-propelled combine harvester (1) according to claim 15 **characterised in that** a spacing sensor (19) monitors for when the spacing between the combine harvester (1) and the collecting container (8) falls below a minimum spacing and exceeds a maximum spacing and causes a steering angle correction at the collecting container (8) or at the drive unit thereof.

## Revendications

1. Dispositif de récolte, composé d'une machine de récolte automotrice (1) et d'un réservoir de collecte mobile (8) pourvu d'une unité d'entraînement, qui peut être positionné par rapport à la machine de récolte (1) et déplacé parallèlement à celle-ci et auquel, pendant l'opération de récolte, un produit de récolte peut être amené directement ou indirectement depuis la machine de récolte (1) par un tube de transport (4) pourvu d'une tubulure de sortie (6), avec un dispositif pour alimenter régulièrement ce réservoir de collecte, **caractérisé en ce qu'**il est prévu un dispositif de commande permettant, pendant le transport du produit de récolte, de déplacer le réservoir de collecte (8) vers une position relative constante par rapport à la machine de récolte (1), et **en ce que** le réservoir de collecte (8) comporte un dispositif de remplissage permettant d'obtenir une répartition régulière du produit de récolte dans le réservoir de collecte (8).

2. Dispositif de récolte selon la revendication 1, **caractérisé en ce que** la machine de récolte est réalisée sous la forme d'une moissonneuse-batteuse automotrice (1), le tube de transport réalisé sous la forme d'un tube de vidange de trémie à grains (4) partant d'une trémie à grains (3) de la moissonneuse-batteuse (1).

3. Dispositif de récolte selon la revendication 1, **caractérisé en ce que** la machine de récolte (1) et l'unité d'entraînement (14, 22) du réservoir de collecte mobile (8) comportent chacune un système de navigation permettant de les maintenir dans une position relative constante pendant le transport du produit de récolte.

4. Dispositif de récolte selon la revendication 2, **caractérisé en ce qu'**un outil frontal de récolte (2) disposé sur la moissonneuse-batteuse (1) présente une extension latérale telle qu'il dépasse de la moissonneuse-batteuse (1) des deux côtés, et **en ce que**, pendant le transport du produit de récolte par l'intermédiaire du tube de vidange de trémie à grains (4), le réservoir de collecte (8) adopte une position située essentiellement à l'intérieur de l'extension de l'outil frontal de récolte (2).

5. Dispositif de récolte selon la revendication 4, **caractérisé en ce que** la moissonneuse-batteuse (1) comporte un broyeur (5) avec un dispositif déflecteur réglable (19a) pour régler la largeur d'un épandage de paille et de balle, lequel dispositif déflecteur (19a) peut être déplacé automatiquement, sur la base d'un signal transmis par le réservoir de collecte (8), vers une position dans laquelle la largeur est réduite d'un côté, de façon à ce qu'il se trouve en dehors d'une voie de circulation du réservoir de collecte (8).

6. Dispositif de récolte selon la revendication 1, **caractérisé en ce que** le dispositif de remplissage du réservoir de collecte comporte au moins un convoyeur longitudinal agissant dans la direction longitudinale du réservoir de collecte (8).

7. Dispositif de récolte selon la revendication 6, **caractérisé en ce que** le convoyeur longitudinal est réalisé sous la forme au moins d'une vis sans fin (15) ou d'un convoyeur à chaîne.

8. Dispositif de récolte selon la revendication 6, **caractérisé en ce que** l'élément de transport est disposé dans une goulotte de transport (16), différentes zones de sortie (17) avec différentes sections de sortie étant réglables sur la goulotte de transport (16).

9. Dispositif de récolte selon la revendication 6, **caractérisé en ce que**, pendant le transport du produit de récolte, la tubulure de sortie (6) du tube de vidange de trémie à grains (4) prend une position à peu près centrale par rapport à une extension longitudinale du réservoir de collecte (8), et **en ce qu'**au moins deux convoyeurs longitudinaux agissant dans des sens de transport contraires s'étendent à partir de cette position.

10. Dispositif de récolte selon la revendication 6, **caractérisé en ce que** le réservoir de collecte (8) comporte, à une de ses extrémités, une trémie de chargement (21) d'où part le convoyeur longitudinal.

11. Dispositif de récolte selon la revendication 6, **caractérisé en ce que** l'unité d'entraînement est réalisée sous la forme d'un porte-outils, de préférence sous la forme d'un véhicule tracteur (22), sur la surface de chargement (23) duquel est disposé un réservoir intermédiaire (24) qui est relié par un convoyeur intermédiaire (25) à une zone d'entrée du convoyeur longitudinal disposé dans le réservoir de collecte (8).

12. Dispositif de récolte selon la revendication 6, **caractérisé en ce que** des capteurs (18) destinés à surveiller un état de remplissage des secteurs du réservoir de collecte (8) associés et permettant de commander le convoyeur longitudinal sont disposés dans la zone de bord supérieure du réservoir de collecte (8).

13. Dispositif de récolte selon la revendication 1, **caractérisé en ce qu'**une caméra (30) reliée à un moniteur prévu dans une cabine de la machine de récolte est disposée sur le tube de transport ou sur sa tubulure de sortie (6).

14. Dispositif de récolte selon la revendication 6, **caractérisé en ce que**, dans une zone d'amenée du convoyeur longitudinal, un capteur à ultrasons (29) surveillant l'entrée, dans le convoyeur longitudinal, du produit de récolte provenant de la tubulure de sortie (6) est disposé sur le réservoir de collecte (8) et relié à un moniteur ou à un système de navigation qui commande la position du réservoir de collecte.

15. Procédé pour décharger un produit de récolte stocké dans une trémie à grains (3) d'une moissonneuse-batteuse automotrice (1) dans un réservoir de collecte mobile (8) pourvu d'une unité d'entraînement, lequel réservoir de collecte (8) peut être positionné par rapport à la moissonneuse-batteuse (1) et déplacé parallèlement à celle-ci, le produit de récolte étant, en même temps que l'opération de récolte, amené directement ou indirectement au réservoir de collecte (8) par un tube de vidange de trémie à grains (4) pourvu d'une tubulure de sortie (6), **caractérisé en ce que**, pour le déchargement du produit de récolte, le réservoir de collecte (8) est déplacé au moyen d'un dispositif de commande vers une position relative constante par rapport à la moissonneuse-batteuse (1), derrière un outil frontal de récolte (2) ou à côté d'un outil frontal de récolte (2), position dans laquelle la tubulure de sortie (6) est orientée de manière constante par rapport à une zone d'entrée d'un convoyeur longitudinal prévu dans le réservoir de collecte (8).

16. Procédé pour décharger un produit de récolte stocké dans une trémie à grains (3) d'une moissonneuse-batteuse automotrice (1) selon la revendication 15, **caractérisé en ce que**, en cas de déchargement avec le réservoir de collecte (8) se déplaçant derrière l'outil frontal de récolte (2), la largeur d'épandage d'un broyeur (5) prévu à la sortie de paille et de balle de la moissonneuse-batteuse (1) est réduite, ladite largeur d'épandage étant maintenue dans la direction du réservoir de collecte (8).

17. Procédé pour décharger un produit de récolte stocké dans une trémie à grains (3) d'une moissonneuse-batteuse automotrice (1) selon la revendication 15, **caractérisé en ce qu'**un remplissage régulier et maximal du réservoir de collecte (8) est surveillé au moyen de capteurs (18, 27, 28) .

18. Procédé pour décharger un produit de récolte stocké dans une trémie à grains (3) d'une moissonneuse-batteuse automotrice (1) selon la revendication 15, **caractérisé en ce qu'**une position de la moissonneuse-batteuse (1) est déterminée par un système de navigation, et une position du réservoir de collecte est ajustée à celle-ci par l'intermédiaire du système de navigation ou d'une liaison radio (12) existant entre la moissonneuse-batteuse et le réservoir de collecte.

19. Procédé pour décharger un produit de récolte stocké dans une trémie à grains (3) d'une moissonneuse-batteuse automotrice (1) selon la revendication 15, **caractérisé en ce qu'**un soupassement d'une distance minimale ainsi qu'un surpassement d'une distance maximale entre la moissonneuse-batteuse (1) et le réservoir de collecte (8) sont surveillés par un capteur de distance (19) et entraînent une correction d'angle de braquage sur le réservoir de collecte (8) ou sur son unité d'entraînement.
